# EUROPÄISCHE PATENTSCHRIFT

(11) **EP 1 639 437 B1**
(45) Veröffentlichungstag und Bekanntmachung des Hinweises auf die Patenterteilung: **18.10.2006**
(21) Anmeldenummer: 04763017.3
(22) Anmeldetag: 22.06.2004
(51) Int. Cl.: G06F 1/16, A41D 1/00

(54) **MODULAR AUFGEBAUTES MIKROELEKTRONIK-SYSTEM ZUM GEBRAUCH IN "WEARABLE ELECTRONICS"**
MODULAR MICROELECTRONIC SYSTEM FOR USE IN WEARABLE ELECTRONICS
SYSTEME MICROELECTRONIQUE MODULAIRE DESTINE A ETRE UTILISE DANS DES DISPOSITIFS ELECTRONIQUES INTEGRES A DES VETEMENTS

(30) Priorität: 24.06.2003 DE 10328359
(43) Veröffentlichungstag der Anmeldung: 29.03.2006
(73) Patentinhaber: Interactive Wear AG, 82319 Starnberg (DE)
(72) Erfinder: GLASER, Rupert, Hermann, Josef, 80339 München (DE); JUNG, Stefan, 81249 München (DE); LAUTERBACH, Christl, 85635 Höhenkirchen-Siegertsbrunn (DE)
(74) Vertreter: Müller-Boré & Partner Patentanwälte
(86) Internationale Anmeldenummer: PCT/EP2004/006745
(87) Internationale Veröffentlichungsnummer: WO 2004/114401

(56) Entgegenhaltungen:
- DE-A- 19 843 236
- US-B1- 6 324 053
- US-B2- 6 561 814
- JUNG S ET AL: "Enabling technologies for disappearing electronics in smart textiles" 2003 IEEE INTERNATIONAL SOLID-STATE CIRCUITS CONFERENCE, 9. Februar 2003 (2003-02-09), Seiten 1-8, XP010661519

## Beschreibung

Die vorliegende Erfindung betrifft ein modulares Mikroelektroniksystem gemäß Anspruch 1.

In zunehmendem Maße wird der Wunsch nach Kleidung und Accessoires geäußert, die außer ihren traditionellen Funktionen, wie Wärme, Schutz und Statussymbol, auch zusätzliche elektronische Funktionen erfüllen können. Viele denkbare Applikationen für intelligente Kleidung (smart clothes) können durch die Integration von elektronischen Bauelementen und Modulen in die Textilien realisiert werden.

Beispielsweise ist es bekannt, handelsübliche Geräte, wie z.B. Mobiltelefone, GPS-Geräte oder MP3-Player in die Kleidung einzunnähen und Verbindungskabel in einer Art textilen Kabelkanälen in eigens dafür konfektionierter Bekleidung vorzusehen. Diese bekannten Anordnungen haben jedoch den Nachteil, daß die Geräte zum Waschen aus der Kleidung entfernt werden müssen und nach dem Trocken der Kleidungstücke wieder angebracht werden müssen. Zusätzlich bieten die Anordnungen vom Stand der Technik den Nachteil, daß wenn das Gerät in dem Bekleidungsstück vor dem Waschen vergessen wurde, daß Gerät beim Waschen beschädigt werden kann.

US 6 561 814 B2 offenbart ein modulares Mikroelektronik-System, umfassend ein Modul, welches mit in einem Kleidungsstück integrierten Nutzerschnittstelleneinrichtungen verbindbar ist. DE 198 43 236 A1 offenbart ein Kleidungsstück mit integrierten elektronischen Funktionsgruppen.

Es ist somit eine Aufgabe der vorliegenden Erfindung, ein Mikroelektroniksystem bereitzustellen, welches eine einfache Handhabung ermöglicht.

Diese Aufgabe wird gemäß der vorliegenden Erfindung gelöst durch ein Mikroelektroniksystem mit den in Anspruch 1 angegebenen Merkmalen. Bevorzugte Ausführungsformen sind Inhalt der abhängigen Ansprüche.

Gemäß der Erfindung wird ein Mikroelektronik-System bereitgestellt, umfassend
- ein erstes Anschlußmodul, welches mit in einem textilen Material integrierten Nutzerschnittstelleneinrichtungen fest verbindbar ist; und
- ein zweites Anschlußmodul, welches Nutzerschnittstelleneinrichtungen umfaßt und/oder mit einer externen Einrichtung verbindbar ist; und
- ein Elektronikmodul, welches mit dem ersten Anschlußmodul oder dem zweiten Anschlußmodul verbindbar ist.

Die Nutzerschnittstelleneinrichtungen umfassen vorzugsweise Bedienelemente für das Elektronikmodul, akustische Ein- und Ausgabeeinrichtungen, wie z.B. Kopfhörer und Mikrophone, etc. In dem textilen Material sind vorzugsweise elektrische Verbindungsleitungen bzw. Drähte angeordnet, z.B. eingewebt, welche mit den Nutzerschnittstelleneinrichtungen verbunden sind. Das textile Material ist bevorzugt in Form eines Kleidungsstücks ausgebildet. Bei der Verwendung, wird das erste Anschlußmodul z.B. durch Löten, Schweißen, Crimpen oder mit einem Leitkleber mit den elektrischen Verbindungsleitungen in dem textilen Material verbunden.

Die Nutzerschnittstelleneinrichtungen des zweiten Anschlußmoduls umfassen vorzugsweise Bedientasten bzw. elemente, ein Display, akustische Ein- und Ausgabeeinrichtungen, wie z.B. Mikrophone und einen Kopfhöreranschluß. Die Nutzerschnittstelleneinrichtungen des zweiten Anschlußmoduls sind insbesondere vorgesehen, um die Funktionen des Elektronikmoduls zu steuern. Wenn das Elektronikmodul mit dem zweiten Anschlußmodul verbunden ist, wird ein eigenständiger Betrieb des Elektronikmoduls bzw. ein sog. "stand-alone-Betrieb" des Elektronikmoduls ermöglicht

Die externe Einrichtung ist vorzugsweise ein Rechner oder ein Steckernetzteil.

Das Elektronikmodul weist vorzugsweise keine Nutzerschnittstelleneinrichtungen auf.

Vorzugsweise umfaßt das Elektronikmodul ein Prozessorelement, eine Energieversorgungseinrichtung bzw. Energiespeichereinrichtung bzw. einen Akkumulator bzw. eine Batterie und eine Kontaktiereinrichtung zum Verbinden mit einem der Anschlußmodule.

Das Prozessorelement umfaßt vorzugsweise alle für die Funktionalität des Elektronikmoduls benötigte Elektronik und einen Festspeicher.

Bevorzugt ist das Elektronikmodul im wesentlichen wasserfest ausgebildet.

Somit kann verhindert werden, daß das Elektronikmodul beschädigt wird, wenn es beim Waschen des textilen Materials an dem textilen Material angeordnet ist.

In einer bevorzugten Ausführungsform umfaßt das Elektronikmodul eine Identifikationseinrichtung zum Erkennen, mit welchem Anschlußmodul das Elektronikmodul im Verbindungszustand verbunden ist.

Bevorzugt können die zwei Anschlußmodule zumindest teilweise unterschiedliche Bedien- oder Ausgabeelemente umfassen. Durch die Identifikationseinrichtung kann das Elektronikmodul erkennen mit welchem Anschlußmodul es verbunden ist und somit auf die unterschiedlichen Funktionalitäten reagieren.

Vorzugsweise umfaßt das erste Anschlußmodul und das zweite Anschlußmodul jeweils eine zu der Kontaktiereinrichtung des Elektronikmoduls passende Kontaktiereinrichtung.

Bevorzugt ist das erste Anschlußmodul im wesentlichen wasserfest ausgebildet.

In einer bevorzugten Ausführungsform ist das erste Anschlußmodul mittels einer Verbindungseinrichtung mit dem textilen Material verbindbar.

Das erste Anschlußmodul wird vorzugsweise mit den in dem textilen Material angeordneten elektrischen Verbindungsleitungen elektrisch kontaktiert. Um einen besseren mechanischen Halt des ersten Anschlußmoduls an dem textilen Material zu ermöglichen, ist vorzugsweise die Verbindungseinrichtung vorgesehen. Die Verbindungseinrichtung ist bevorzugt eine Platte zum Einkleben, eine Vorrichtung zum Einnähen oder eine Schnalle zum Anbringen an ein Halteband.

Das zweite Anschlußmodul ist vorzugsweise derart ausgestaltet, daß, wenn das zweite Anschlußmodul mit einer externen Einrichtung verbunden ist, ein Laden der Energieversorgungseinrichtung des Elektronikmoduls und/oder ein Übertragen von Daten zu und/oder von dem Elektronikmodul ermöglicht wird.

Wenn das zweite Anschlußmodul mit einer externen Einrichtung, vorzugsweise einem Rechner, verbunden ist, hat das zweite Anschlußmodul vorzugsweise die Funktion einer sogenannten "Docking Station" über welche das Elektronikmodul aufgeladen werden kann und Daten übertragen werden können.

Bevorzugt umfaßt das System ferner eine Ladevorrichtung zum Laden der Energieversorgungseinrichtung des Elektronikmoduls, welche mit dem Elektronikmodul und/oder dem zweiten Anschlußmodul verbindbar ist.

Durch das Vorsehen der Ladevorrichtung muß zum Laden der Energieversorgungseinrichtung des Elektronikmoduls nicht notwendigerweise über z.B. einen angeschlossenen Rechner erfolgen. Die Energieversorgung bzw. das Aufladen kann in diesem Fall direkt über das Ladegerät oder mittelbar über das zweite Anschlußmodul erfolgen.

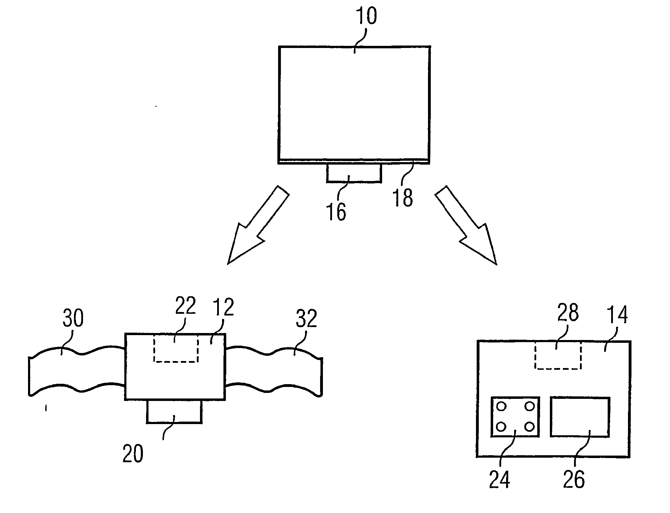

Weitere Merkmale, Aufgaben und Vorteile einer Ausführungsform der vorliegenden Erfindung werden offensichtlich aus der nachfolgenden Beschreibung mit Bezug auf die Figur. Insbesondere zeigt die

Figur eine schematische Ansicht eines Mikroelektroniksystems gemäß einer bevorzugten Ausführungsform der vorliegenden Erfindung.

Das Mikroelektroniksystem gemäß der bevorzugten Ausführungsform umfaßt ein Elektronikmodul 10, ein erstes Anschlußmodul 12 und ein zweites Anschlußmodul 14.

Das Elektronikmodul 10 umfaßt im wesentlichen alle für die Funktionalität des Elektronikmoduls notwendige Elektronik, einen Akkumulator bzw. eine Batterie bzw. eine Energiespeichereinrichtung bzw. Energieversorgungseinrichtung, einen Festspeicher und eine Kontaktiereinrichtung bzw. einen Stecker zum Verbinden mit einem der beiden anderen Module 12, 14. Beispielsweise kann das Elektronikmodul 10 Komponenten umfassen, um einen MP-3-Player oder ein Mobiltelefon auszubilden.

Bevorzugt sind in dem Elektronikmodul 10 keine Nutzerschnittstellen bzw. Nutzerinterfaces vorgesehen. Die Bedienung des Elektronikmoduls 10 erfolgt, wie später beschrieben, über eines der Anschlußmodule 12, 14.

Das Elektronikmodul 10 kann ferner eine Identifikationseinrichtung umfassen, mittels welcher ermittelt werden kann, ob das Elektronikmodul 10 mit dem ersten Anschlußmodul 12 oder dem zweiten Anschlußmodul 14 verbunden ist.

Das Eletronikmodul 10 ist vorzugsweise wasserfest vergossen oder gemoldet, so daß es bei Kontakt mit Wasser nicht beschädigt wird. Ferner umfaßt das Elektronikmodul vorzugsweise einen Dichtungsring 18.

Das erste Anschlußmodul 12 ist für den festen Einbau in ein textiles Kleidungsstück vorgesehen (sogenannte "wearable electronics"). Hierbei sind in dem textilen Material elektrische Verbindungsleitungen bzw. Drähte angeordnet, z.B. eingewebt, welche eine elektrische Verbindung zwischen dem ersten Anschlußmodul 12 und Nutzerschnittstelleneinrichtungen, wie z.B. Kopfhörern, Bedienelementen oder Mikrophonen herstellen. Die Nutzerschnittstelleneinrichtungen sind vorzugsweise ebenfalls in das textile Kleidungsstück integriert. Das erste Anschlußmodul 12 wird vorzugsweise durch Löten oder mit Hilfe eines Leitklebers mit den elektrischen Verbindungsleitungen des textilen Materials kontaktiert.

Das erste Anschlußmodul 12 enthält vorzugsweise keine Elektronik sondern bildet eine Schnittstelle bzw. eine Umkontaktierung zwischen den in dem textilen Material angeordneten elektrischen Verbindungsleitungen bzw. den Nutzerschnittstelleneinrichtungen und dem Elektronikmodul 10. Die elektrischen Verbindungsleitungen sind vorzugsweise als textile Kabel ausgestaltet. In der Figur bezeichnet Bezugszeichen 30 ein textiles Kabel z.B. für Audio und Bezugszeichen 32 ein textiles Kabel z.B. für ein Keypad.

Ferner umfaßt das erste Anschlußmodul 12 eine Verbindungseinrichtung 20 zum Verbinden des ersten Anschlußmoduls 12 mit dem textilen Material. Die Verbindungseinrichtung 20 kann eine Platte zum Einkleben, eine Vorrichtung zum Einnähen oder eine Schnalle zum Anbringen an ein Halteband sein. Durch die Verbindungseinrichtung 20 kann eine gute bzw. haltbare mechanische Befestigung des ersten Anschlußmoduls 12 an dem textilen Material erreicht werden.

Des weiteren umfaßt das erste Anschlußmodul 12 eine Kontaktiereinrichtung bzw. Buchse 22, welche mit dem Stecker 16 des Elektronikmoduls 10 zusammenpaßt.

Das erste Anschlußmodul 12 ist vorzugsweise ebenfalls wasserfest vergossen bzw. gemoldet und es ist vorgesehen, daß es beim Waschen textilen Materials in dem textilen Material verbleibt. Ferner ist die Verbindungsstelle zwischen dem ersten Anschlußmodul 12 und den elektrischen Verbindungsleitungen ebenfalls wasserfest ausgebildet bzw. vor Wasser geschützt.

Das zweite Anschlußmodul 14 umfaßt Nutzerschnittstelleneinrichtungen wie Bedienelemente 24 zum Bedienen des Elektronikmoduls 10, eine Anzeige bzw. eine Display 26 und eine (nicht dargestellte) Buchse für einen Kopfhöreranschluß oder ähnliches. Des weiteren kann das zweite Anschlußmodul 14 auch eine Akkumulatorladeeinrichtung aufweisen zum Laden des Akkumulators des Elektronikmoduls 10. Die in dem zweiten Anschlußmodul 14 vorgesehenen Nutzerschnittstelleneinrichtungen können den Nutzerschnittstelleneinrichtungen des textilen Kleidungsstücks entsprechen oder es können auch zusätzliche Einrichtungen vorgesehen sein.

Das zweite Anschlußmodul 14 ist vorzugsweise ferner als eine Art "Dockingstation" bzw. Andockstation ausgebildet. Hierbei kann das zweite Anschlußmodul 14 vorzugsweise über eine (nicht dargestellte) serielle Schnittstelle, wie z.B. eine USB-Schnittstelle, mit einem Rechner oder einer anderen geeigneten externen Einrichtung verbunden werden. Dadurch können z.B. Daten zwischen dem Elektronikmodul 10 und dem Rechner ausgetauscht werden oder der Akkumulator des Elektronikmoduls 10 kann geladen werden.

Das zweite Anschlußmodul 14 umfaßt ferner eine Kontaktiereinrichtung bzw. Buchse 28 zum Verbinden mit dem Elektronikmodul 10.

Es ist nicht notwendig, daß das zweite Anschlußmodul 14 wasserfest oder waschbar ausgestaltet ist.

Das erste Anschlußmodul 12 und das zweite Anschlußmodul 14 müssen nicht notwendigerweise denselben Formfaktor aufweisen. Dies bedeutet, daß z.B. das erste Anschlußmodul 12 kleiner ausgebildet sein kann als das zweite Anschlußmodul 14.

Zusätzlich zu den drei beschriebenen Komponenten, kann in dem System gemäß der bevorzugten Ausführungsform der Erfindung eine Ladestation (nicht dargestellt) vorgesehen sein, um den Akkumulator des Elektronikmoduls 10 über das zweite Anschlußmodul 14 oder direkt zu laden.

Nachfolgend wird der Betrieb des Mikroelektroniksystems beschrieben.

Das Elektronikmodul 10 kann entweder mit dem ersten Anschlußmodul 12 oder dem zweiten Anschlußmodul 14 verbunden werden. Zunächst wird der Betrieb des Systems beschrieben, wenn das Elektronikmodul 10 mit dem ersten Anschlußmodul 12 verbunden ist.

Hierbei wird der Stecker 16 in die Buchse 22 eingerastet. Vorzugsweise ist eine zusätzliche Rastvorrichtung (nicht dargestellt) vorgesehen, welche eine stabile mechanische Verbindung zwischen dem Elektronikmodul 10 und dem ersten Anschlußmodul 12 ausbildet. Der Dichtungsring 18 ermöglicht eine im wesentlichen wasserfeste bzw. wasserdichte Verbindung zwischen dem Elektronikmodul 10 und dem ersten Anschlußmodul 12, so daß kein Wasser in den Verbindungsbereich eindringen kann. Alternativ kann auf den Dichtungsring 18 verzichtet werden und die Kontaktiereinrichtungen 16, 22 derart ausgebildet werden, daß ein Inkontaktkommen mit Wasser keine Beeinträchtigung der Funktionsweise zur Folge hat.

Wenn das Elektronikmodul 10 und das erste Anschlußmodul 12 miteinander verbunden sind, kann das Elektronikmodul 10 über die in dem textilen Gewebe angeordneten Bedieneinrichtungen, wie z.B. ein Touchpad bedient werden. Ferner kann eine akustische Ausgabe über Kopfhörer und/oder eine akustische Eingabe über Mikrofone erfolgen. Beispielsweise kann das Elektronikmodul 10 die Funktionalität eines MP3-Players oder eines Mobiltelefons haben.

Das Elektronikmodul 10 kann auf einfache Weise in das textile Kleidungsstück integriert werden und durch die in dem Kleidungsstück integrierten Bedienelemente bedient werden.

Beim Waschen des Kleidungsstücks kann das wasserfest ausgestaltete Elektronikmodul 10 in dem Kleidungsstück verbleiben. Ferner kann das Elektronikmodul 10 auf Grund der Verbindung über Stecker 16 und Buchse 22 auf einfache Weise wieder entfernt werden.

Nachfolgend wird der Betrieb des Systems beschrieben, wenn das Elektronikmodul 10 mit dem zweiten Anschlußmodul 14 verbunden ist.

Die Buchse 28 ist im wesentlichen gleich ausgebildet wie die Buchse 22 des ersten Anschlußmoduls 12. Auch hier kann eine zusätzliche nicht gezeigt Rastvorrichtung vorgesehen sein. Der Stecker 16 rastet in die Buchse 28 ein, wodurch eine stabile mechanische Verbindung zwischen dem Elektronikmodul 10 und dem zweiten Anschlußmodul 14 ausgebildet wird.

Das zweite Anschlußmodul 14 weist vorzugsweise zwei Funktionalitäten auf.

Zu einen kann mit Hilfe des zweiten Anschlußmoduls 14 ein stand alone Betrieb des Elektronikmoduls 10 , d.h. ein Betrieb ohne das Kleidungsstück ermöglicht werden. Das Elektronikmodul 10 wird hierbei mit Hilfe der Bedienelemente 24 bedient und eine akustische Ausgabe kann z.B. über Kopfhörer erfolgen.

Des weiteren kann das zweite Anschlußmodul 14 mit einem Rechner über beispielsweise eine (nicht dargestellte) serielle Schnittstelle verbunden werden. In diesem Betriebsmodus können Daten von und zu dem Elektronikmodul 10 und dem Rechner ausgetauscht werden. Des weiteren kann der Akkumulator des Elektronikmoduls 10 aufgeladen werden. Ferner ist es ebenfalls denkbar, daß das Elektronikmodul 10 über in dem Rechner vorhandene Bedienelemente bedient wird.

Des weiteren kann die selbe serielle Schnittstelle ausgenutzt werden, um ein Steckernetzteil anzuschließen und so den Akku ohne Rechner zu laden.

Mit Hilfe der Identifikationseinrichtung kann das Elektronikmodul 10 ermitteln, mit welchem Anschlußmodul es verbunden ist und eine entsprechende Konfiguration annehmen. Beispielsweise kann vorgesehen sein, daß das Elelktronikmodul 10 zusätzliche Funktionen aufweist, wenn es mit dem zweiten Anschlußmodul 14 verbunden ist.

Durch den modularen Aufbau des Mikroelektroniksystems kann das Elektronikmodul 10 für mehrere Anwendungen vorgesehen werden. Zum einen kann das Elektronikmodul 10 in einem "wearable electronics"-Kleidungsstück verwendet werden. Zum anderen wird mit Hilfe des zweiten Anschlußmoduls 14 ein stand-alone-Betrieb ermöglicht. Dies bietet den Vorteil, daß die kostspielige Komponente, d.h. das Elektronikmodul nur einmal vorgesehen werden muß und in verschiedene Anwendungen integriert werden kann. Insbesondere wenn der Nutzer mehrere "wearable electronics"-Kleidungsstücke erwirbt, müssen hierbei nur das erste Anschlußmodul 12 und die textilen Interfacekomponenten in dem Kleidungsstück vorgesehen sein. Das Elektronikmodul 10 kann jeweils in den verschiedenen Kleidungsstücken verwendet werden.

### Bezugszeichenliste

- 10: Elektronikmodul
- 12: erstes Anschlußmodul
- 14: zweites Anschlußmodul
- 16: Stecker
- 18: Dichtungsring
- 20: Verbindungseinrichtung
- 22: Buchse
- 24: Bedienelemente
- 26: Display
- 28: Buchse
- 30: textiles Kabel
- 32: textiles Kabel

## Patentansprüche

1. Modulares Mikroelektronik-System, umfassend
- ein erstes Anschlußmodul (12), welches mit in einem textilen Material integrierten Nutzerschnittstelleneinrichtungen fest verbindbar ist; und
- ein zweites Anschlußmodul (14), welches Nutzerschnittstelleneinrichtungen (24, 26) umfaßt und/oder mit einer externen Einrichtung verbindbar ist; und
- ein Elektronikmodul (10), welches mit dem ersten Anschlußmodul (12) oder dem zweiten Anschlußmodul (14) verbindbar ist.

2. System gemäß Anspruch 1, wobei das Elektronikmodul (10) ein Prozessorelement, eine Energieversorgungseinrichtung und eine Kontaktiereinrichtung (16) zum Verbinden mit einem der Anschlußmodule (12, 14) umfaßt.

3. System gemäß Anspruch 1 oder 2, wobei das Elektronikmodul (10) im wesentlichen wasserfest ausgebildet ist.

4. System gemäß einem der vorangehenden Ansprüche, wobei das Elektronikmodul (10) eine Identifikationseinrichtung umfaßt zum Erkennen, mit welchem Anschlußmodul (12, 14) das Elektronikmodul (10) im Verbindungszustand verbunden ist.

5. System gemäß einem der vorangehenden Ansprüche, wobei das erste Anschlußmodul (12) und das zweite Anschlußmodul (14) jeweils eine zu der Kontaktiereinrichtung (16) des Elektronikmoduls (10) passende Kontaktiereinrichtung (22, 28) umfaßt.

6. System gemäß einem der vorangehenden Ansprüche, wobei das erste Anschlußmodul (12) im wesentlichen wasserfest ausgebildet ist.

7. System gemäß einem der vorangehenden Ansprüche, wobei das erste Anschlußmodul (12) mittels einer Verbindungseinrichtung (20) mit dem textilen Material verbindbar ist.

8. System gemäß einem der vorangehenden Ansprüche, wobei das zweite Anschlußmodul (14) derart ausgestaltet ist, daß, wenn das zweite Anschlußmodul (14) mit einer externen Einrichtung verbunden ist, ein Laden der Energieversorgungseinrichtung des Elektronikmoduls (10) und/oder ein Übertragen von Daten zu und/oder von dem Elektronikmodul (10) ermöglicht wird.

9. System gemäß einem der vorangehenden Ansprüche, wobei das System ferner eine Ladevorrichtung zum Laden der Energieversorgungseinrichtung des Elektronikmoduls (10) umfaßt, welche mit dem Elektronikmodul (10) und/oder dem zweiten Anschlußmodul (14) verbindbar ist.

## Claims

1. Modular microelectronic system, comprising
- a first connection module (12), which can be firmly connected to user interface devices integrated into a textile material; and
- a second connection module (14), which comprises user interface devices (24, 26) and/or can be connected to an external device; and
- an electronic module (10), which can be connected to the first connection module (12) or to the second connection module (14).

2. System pursuant to claim 1, wherein the electronic module (10) comprises a processor element, a power supply unit and a junction device (16) for connecting with one of the connection modules (12, 14).

3. System pursuant to claim 1 or 2, wherein the electronic module (10) is designed to be essentially waterproof.

4. System pursuant to one of the preceding claims, wherein the electronic module (10) comprises an identification device designed to recognize which connection module (12, 14) the electronic module (10) is connected to in a connected state.

5. System pursuant to one of the preceding claims, wherein the first connection module (12) and the second connection module (14) each comprise a junction device (22, 28) that can accommodate the junction device (16) of the electronic module (10).

6. System pursuant to one of the preceding claims, wherein the first connection module (12) is designed to be essentially waterproof.

7. System pursuant to one of the preceding claims, wherein the first connection module (12) can be attached to the textile material by means of a mounting device (20).

8. System pursuant to one of the preceding claims, wherein the second connection module (14) is designed such that when the second connection module (14) is connected to an external device, a charging of the power supply unit of the electronic module (10) and/or a transfer of data to and/or from the electronic module (10) is enabled.

9. System pursuant to one of the preceding claims, wherein the system further comprises a charging device for charging the power supply unit of the electronic module (10), which can be connected to the electronic module (10) and/or to the second connection module (14).

## Revendications

1. Système microélectronique modulaire comportant
- un premier module de raccord (12), qui est apte à être relié fermement à des dispositifs à interface utilisateur, intégrées dans un matériau textile ; et
- un deuxième module de raccord (14) qui comporte des dispositifs à interface utilisateur (24, 26) et/ou est apte à être relié à un dispositif externe ; et
- un module électronique (10), qui est apte à être relié au premier module de raccord (12) ou au deuxième module de raccord (14).

2. Système selon la revendication 1, dans lequel le module électronique (10) comporte un élément de processeur, un dispositif d'alimentation en énergie et un dispositif de mise en contact (16) pour la liaison à l'un des modules de raccord (12, 14).

3. Système selon la revendication 1 ou 2, dans lequel le module électronique (10) est réalisé sensiblement résistant à l'eau.

4. Système selon l'une quelconque des revendications précédentes, dans lequel le module électronique (10) comporte un dispositif d'identification destiné à détecter avec quel module de raccord (12, 14) le module électronique (10) est en liaison.

5. Système selon l'une quelconque des revendications précédentes, dans lequel le premier module de raccord (12) et le deuxième module de raccord (14) comportent chacun un dispositif de mise en contact (22, 28) adapté au dispositif de mise en contact (16) du module électronique (10).

6. Système selon l'une quelconque des revendications précédentes, dans lequel le premier module de raccord (12) est réalisé sensiblement résistant à l'eau.

7. Système selon l'une quelconque des revendications précédentes, dans lequel le premier module de raccord (12) est apte à être relié au matériau textile au moyen d'un dispositif de liaison (20).

8. Système selon l'une quelconque des revendications précédentes, dans lequel le deuxième module de raccord (14) est réalisé de telle sorte que, lorsque le deuxième module de raccord (14) est relié à un dispositif externe, il est possible de charger le dispositif d'alimentation en énergie du module électronique (10) et/ou de transmettre des données vers le module électronique (10) et/ou à partir de celui-ci.

9. Système selon l'une quelconque des revendications précédentes, dans lequel le système comporte en outre un dispositif de chargement, qui est destiné à charger le dispositif d'alimentation en énergie du module électronique (10) et qui peut être relié au module électronique (10) et/ou au deuxième module de raccord (14).
